# EUROPÄISCHE PATENTSCHRIFT

(11) **EP 3 360 739 B1**
(45) Veröffentlichungstag und Bekanntmachung des Hinweises auf die Patenterteilung: **30.10.2019**
(21) Anmeldenummer: 18154650.8
(22) Anmeldetag: 01.02.2018
(51) Int. Cl.: B60T 13/14, B60T 8/17, B62L 3/02, B60T 13/68, B62K 25/04, B60T 7/08, B60T 8/48, B62K 25/08, B62L 1/00, B62M 6/40, B60T 8/32, B60T 8/42, B60T 11/224, B60T 13/66

(54) **BAUGRUPPE FÜR EIN ZWEIRADFAHRZEUG MIT EINEM DRUCKSPEICHER UND VERFAHREN ZUR SPEICHERUNG DER DURCH DIE FAHRZEUGFEDERUNG BEREITGESTELLTEN ENERGIE**
ASSEMBLY FOR A TWO-WHEELED VEHICLE WITH A PRESSURE ACCUMULATOR AND A METHOD FOR STORING THE ENERGY PROVIDED BY THE VEHICLE SUSPENSION
MODULE POUR UN VÉHICULE À DEUX ROUES AVEC UN ACCUMULATEUR DE PRESSION ET PROCÉDÉ DE STOCKAGE DE L'ÉNERGIE FOURNI PAR LA SUSPENSION DE VÉHICULE

(30) Priorität: 09.02.2017 DE 102017202020
(43) Veröffentlichungstag der Anmeldung: 15.08.2018
(73) Patentinhaber: Robert Bosch GmbH, 70442 Stuttgart (DE)
(72) Erfinder: Dasbach, Gregor, 72074 Tuebingen (DE); Trautmann, Simon, 70599 Stuttgart (DE); Widmaier, Georg, 71229 Leonberg (DE); Wienss, Andreas, 72800 Eningen Unter Achalm (DE)

(56) Entgegenhaltungen:
- EP-A1- 2 062 758
- WO-A1-2008/130336
- WO-A1-2014/108235
- DE-A1-102007 054 771
- DE-A1-102013 217 754
- DE-A1-102014 210 382
- US-A- 6 106 078

## Beschreibung

### Stand der Technik

Die vorliegende Erfindung betrifft eine Zweirad-Baugruppe mit einer Druckspeichereinrichtung sowie ein Verfahren zur Verbesserung eines Bremsverhaltens eines Zweirads. Die Zweirad-Baugruppe ist besonders bevorzugt eine Baugruppe für ein Elektrofahrrad und das Verfahren wird ebenfalls besonders bevorzugt bei einem Elektrofahrrad verwendet.

Moderne Zweiräder, wie beispielsweise Elektrofahrräder oder Mountainbikes weisen häufig Federgabeln und/oder mittlere Dämpfungselemente am Rahmen des Zweirads auf, um einen Fahrkomfort zu verbessern. Ferner weisen moderne Zweiräder häufig hydraulische Bremseinrichtungen auf, welche ein verbessertes Bremsverhalten als beispielsweise Felgenbremsen bereitstellen. Während der normalen Nutzung des Zweirads treten hierbei Federungsvorgänge auf, wobei die bei den Federungsvorgängen entstehende Energie bisher am Zweirad nicht genutzt wird.

Aus US 6 106 078 A ist ferner ein Bremsbetätigungssystem mit Druckerhöhung durch einen Federungsdämpfer bekannt.

Weiterhin zeigt DE 10 2007 054771 A1 einen elektromechanischen Stoßdämpfer bzw. elektromechanisches Feder-Dämpfer Element zur Umwandlung von Bewegungen und Schwingungen in elektrische Energie.

Aus WO 2008/130336 A1 ist zudem ein integriertes Fahrrad-Schalt- und Federungssystem bekannt.

WO 2014/108235 A1 zeigt ein hydraulisches Antiblockiersystem für ein Zweirad.

DE 10 2013 217754 A1 zeigt weiterhin eine Wegfahrsperre für ein Fahrrad.

Aus EP 2 062 758 A1 ist zudem eine Vorrichtung mit einem Federungssystem sowie ein Verfahren zur Einstellung eines Federungssystems bekannt.

Ferner zeigt DE 10 2014 210382 A1 ein Verfahren zur Verteilung einer Bremskraft und eine Bremseinrichtung.

### Offenbarung der Erfindung

Die erfindungsgemäße Zweirad-Baugruppe mit den Merkmalen des Anspruchs 1 weist demgegenüber den Vorteil auf, dass Energie, welche mittels einer Federeinrichtung am Zweirad erzeugt wird, auch genutzt wird. Die erfindungsgemäße Zweirad-Baugruppe weist dabei eine Federeinrichtung und eine hydraulische Bremseinrichtung auf. Die Bremseinrichtung umfasst eine Radbremse, einen Bremsauslöser zum Beispiel einen Bremshebel, vorzugsweise mit einem Bremszylinder, so wie hydraulische Bremsleitung. Die hydraulische Bremsleitung verbindet die Radbremse mit dem Bremsauslöser. Ferner umfasst die Zweirad-Baugruppe eine Koppeleinrichtung, welche die Federeinrichtung und die Bremseinrichtung miteinander koppelt. Weiterhin ist eine Druckspeichereinrichtung vorgesehen, welche eingerichtet ist, Energie, die durch eine Federwirkung der Federeinrichtung bereitgestellt wird, zu speichern. Erfindungsgemäß ist es somit möglich, dass Energie, welche mittels der Federeinrichtung während des normalen Fahrens mit dem Zweirad erzeugt wird, in der Druckspeichereinrichtung gespeichert wird und insbesondere zu einem anderen Zeitpunkt in einer hydraulischen Bremseinrichtung verwendet werden kann. Somit kann über die Koppeleinrichtung eine Verbindung zwischen der Federeinrichtung und der hydraulischen Bremseinrichtung bereitgestellt werden.

Die in der Druckspeichereinrichtung gespeicherte hydraulische und/oder mechanische Energie kann über die Koppeleinrichtung, welche die Federeinrichtung und die Bremseinrichtung miteinander koppelt, in die hydraulische Bremseinrichtung eingekoppelt werden. Hierzu kann ein direkter Zufluss beispielsweise eines Fluids in die hydraulische Bremsleitung erfolgen.

Alternativ kann auch ein Übertragungsmittel zwischen Druckspeichereinrichtung und hydraulischer Bremsleitung vorgesehen sein, mittels dem ein Drucksignal oder generell ein Druck von der einen zur anderen Seite bzw. umgekehrt übertragen werden kann. In diesem Fall ist beispielsweise möglich, dass die Druckspeichereinrichtung pneumatisch und die Bremseinrichtung hydraulisch betrieben werden kann. Durch das Übertragungsmittel, welches durch die Koppeleinrichtung freigeschalten werden kann, kann ein Fluidfluss zwischen den beiden Systemen vermieden werden, so dass Beeinträchtigungen z.B. durch Verschmutzungen vermieden werden. Mittels des Übertragungsmittels ist auch eine Druckweitergabe einer rein mechanisch Energie speichernden Druckspeichereinrichtung z.B. mittels Federn möglich

Es sei angemerkt, dass die Federeinrichtung der Zweirad-Baugruppe ein mechanisches Federelement und/oder ein pneumatisches Federelement und/oder ein hydraulisches Federelement umfassen kann. Mit anderen Worten werden auch Dämpfungsvorgänge in Fluiden, wie einem Gas oder einer Flüssigkeit als Federwirkung einer Federeinrichtung verstanden. Hauptsächlich wird bevorzugt die mittels des mechanischen Federelements erzeugte Energie genutzt.

Weiterhin weist die Druckspeichereinrichtung einen Überdruckspeicher und einen Unterdruckspeicher auf. Somit kann Überdruck, welcher durch die Federeinrichtung beispielsweise bei Einfederungsvorgängen erzeugt wird, und Unterdruck, welcher durch die Federeinrichtung beispielsweise bei Rückstellvorgängen erzeugt wird, in der Druckspeichereinrichtung gespeichert werden. Dabei wird sowohl Überdruck als auch Unterdruck gespeichert, wobei hier zwei separate Druckspeicher vorgesehen sind, wobei einer den Überdruck und der andere den Unterdruck speichert

Die Unteransprüche zeigen bevorzugte Weiterbildungen der Erfindung.

Weiter bevorzugt umfasst die Zweirad-Baugruppe ferner ein Stellventil, welches zwischen der Druckspeichereinrichtung und der hydraulischen Bremseinrichtung angeordnet ist. Wenn die Druckspeichereinrichtung einen Überdruckspeicher und einen Unterdruckspeicher umfasst, kann mittels einer Steuereinheit das Stellventil angesteuert werden und somit eine Druckregelung in der hydraulischen Bremseinrichtung ermöglicht werden. Hierbei ist eine erste Leitung vom Überdruckspeicher zum Stellventil, eine zweite Leitung vom Unterdruckspeicher zum Stellventil und eine dritte Leitung vom Stellventil zur hydraulischen Bremsleitung vorgesehen. Das Stellventil ist bevorzugt ein 3/3-Wegeventil und stellt in einer ersten Stellung eine Unterbrechung zwischen der ersten und zweiten Leitung sowie der dritten Leitung bereit, in einer zweiten Stellung eine Verbindung zwischen der ersten Leitung und der dritten Leitung zur hydraulischen Bremsleitung und in einer dritten Stellung eine Verbindung zwischen der zweiten Leitung und der dritten Leitung zur hydraulischen Bremsleitung bereit.

Die Steuereinheit ist bevorzugt eingerichtet, mittels der Druckspeichereinrichtung eine ABS-Regelung (Antiblockiersystem) des Zweirads und/oder eine ASR-Regelung (Antischlupfregelung) des Zweirads und/oder eine Wegfahrsperre und/oder einen Überschlagschutz auszuführen.

Ferner bevorzugt ist die Steuereinheit eingerichtet, in Abhängigkeit einer ABS-Regelung und/oder einer ASR-Regelung Federungseigenschaften der Federeinrichtung zu ändern. Hierdurch kann beispielsweise bei einem Bremseingriff und einer ABS-Regelung ein Federverhalten der Federeinrichtung reduziert werden oder vollständig blockiert werden. Hierdurch kann insbesondere die Gefahr eines Überschlags, wenn die Federeinrichtung beispielsweise an einer Vordergabel des Zweirads angeordnet ist, während eines Bremsvorgangs reduziert werden.

Weiter bevorzugt ist die Steuereinheit eingerichtet, eine Wegfahrsperre für das Zweirad bereitzustellen. Die Wegfahrsperre wird beispielsweise durch Aktivierung einer Radbremse der hydraulischen Bremseinrichtung bereitgestellt, wobei die Wegfahrsperre bevorzugt mittels Überdruck aus der Druckspeichereinrichtung realisiert ist.

Weiter bevorzugt ist die Druckspeichereinrichtung an der hydraulischen Bremseinrichtung angeordnet. Alternativ ist die Druckspeichereinrichtung an der Federeinrichtung angeordnet. Weiter alternativ ist die Druckspeichereinrichtung an der Koppeleinrichtung, welche die Federeinrichtung mit der hydraulischen Bremseinrichtung koppelt, angeordnet.

Um eine Medientrennung zu erreichen, ist vorzugsweise ein Fluidzwischenbereich vorgesehen, welcher zwischen der hydraulischen Bremseinrichtung und der Federeinrichtung angeordnet ist. Dadurch sind drei Fluidkreisläufe vorgesehen, nämlich ein erster Fluidkreislauf an der Federeinrichtung, ein zweiter Fluidkreislauf an der hydraulischen Bremseinrichtung und ein dritter Fluidkreislauf des Fluidzwischenbereichs. Neben der eine hydraulische Flüssigkeit aufweisenden hydraulischen Bremseinrichtung weist auch der zweite Fluidzwischenbereich vorzugsweise eine Hydraulikflüssigkeit auf.

Die Federeinrichtung ist vorzugsweise eine Federgabel an einem Vorderrad des Zweirads oder eine mittige Federeinrichtung an einem Rahmen des Zweirads zur Federung eines Hinterrads und/oder eine Federeinrichtung an einem Sattel oder in einem Sattelrohr zur Federung des Sattels.

Wenn die Federeinrichtung bevorzugt eine Federgabel mit einem Federgabelgehäuse ist, ist vorzugsweise die Druckspeichereinrichtung im Federgabelgehäuse angeordnet. Weiter bevorzugt ist auch die Steuereinheit im Federgabelgehäuse zusätzlich angeordnet. Hierdurch kann ein besonders kompakter und kleinbauender Aufbau ohne großes Gewicht für das Zweirad realisiert werden, da das Federgabelgehäuse zusätzliche Funktionen zur Aufnahme der Druckspeichereinrichtung und/oder der Steuereinheit und/oder weiterer Bauteile der Zweirad-Baugruppe, übernimmt.

Wenn weiter bevorzugt die Federeinrichtung eine Sattelfedereinrichtung an einem Sattel des Zweirads ist, ist eine Steuereinheit bevorzugt vorgesehen, welche eingerichtet ist, die Sattelfedereinrichtung zu sperren und/oder den Sattel abzusenken. Hierdurch kann z.B. ein Schwerpunkt des Fahrers durch Absenkung des Sattels nach unten verlegt werden, sodass die Gefahr eines Überschlags, insbesondere bei einem Bremsvorgang, reduziert wird. Die Steuereinheit senkt dabei den Sattel insbesondere in Abhängigkeit einer Stärke eines Bremsvorgangs ab. Das heißt bei einer starken Bremsung wird auch der Sattel um ein großes Stück nach unten verlagert.

Gemäß einer weiteren bevorzugten Ausgestaltung der vorliegenden Erfindung umfasst die Federeinrichtung eine Arretiervorrichtung. Hierbei ist eine Steuereinheit bevorzugt vorgesehen, welche die Arretiervorrichtung arretiert, um die Federeinrichtung zu blockieren. Die Steuereinheit arretiert die Federeinrichtung insbesondere in Abhängigkeit einer Stärke eines Bremsvorgangs. Das heißt bei einer starken Bremsung wird die Federeinrichtung arretiert, um, wenn die Federeinrichtung beispielsweise an der Federgabel des Zweirads angeordnet ist, ein Einnicken eines Lenkers des Zweirads aufgrund des starken Bremsvorgangs zu vermeiden.

Weiter bevorzugt umfasst die Druckspeichereinrichtung einen Drucksensor. Mittels des Drucksensors kann ein Druck in den Druckspeicher der Druckspeichereinrichtung erfasst werden. Wenn beispielsweise ein vorbestimmtes Druckniveau in einem Druckspeicher erreicht ist, kann der Steuereinheit signalisiert werden, dass dieses Druckniveau im Druckspeicher erreicht ist und weiteres Laden des Speichers nicht mehr notwendig ist. Dann wird vorzugsweise der Druckspeicher mittels einer Sperrvorrichtung von der Federeinrichtung getrennt.

Weiter bevorzugt umfasst die Zweirad-Baugruppe eine elektrisch angetriebene Pumpe, welche insbesondere an der Druckspeichereinrichtung angeordnet ist. Durch das Vorsehen der elektrischen Pumpe kann hierbei sichergestellt werden, dass immer ein ausreichendes Druckniveau im Überdruckspeicher bzw. ein entsprechend tiefes Druckniveau im Unterdruckspeicher vorhanden ist, um die beiden Druckspeicher zur ABS-Regelung und/oder ASR-Regelung verwenden zu können. Hierdurch können insbesondere Situationen in einem normalen Fahrbetrieb ausgeglichen werden, bei denen keine Federwirkung auftritt, beispielsweise bei einer längeren Fahrt in einer Ebene auf einem ebenen Untergrund. Somit können Situationen vermieden werden, in denen die Druckspeicher nicht ausreichend geladen sind, um mittels der Steuereinheit eine vorbestimmte Regelung auszuführen.

Weiterhin betrifft die vorliegende Erfindung ein Zweirad mit einer erfindungsgemäßen Zweirad-Baugruppe. Das Zweirad ist vorzugsweise ein Fahrrad und besonders bevorzugt ein Elektrofahrrad mit einem elektrischen Energiespeicher. Der elektrische Energiespeicher ist vorzugsweise ein Akku oder eine Batterie, wobei eine Steuereinheit der Zweirad-Baugruppe mit dem elektrischen Energiespeicher verbunden ist und von diesem elektrischer Energie versorgt wird.

Ferner betrifft die vorliegende Erfindung ein Verfahren zur Nutzung einer Federenergie, welche von Federeinrichtungen des Zweirads bereitgestellt wird. Insbesondere wird die Federenergie während eines Fahrens mit dem Zweirad erzeugt und in einer Bremseinrichtung oder einer beweglichen Sattelstütze des Zweirads genutzt. Damit die während des Fahrens erzeugte Energie in allen . Fahrsituationen des Zweirads vorhanden ist, wird diese in einer Druckspeichereinrichtung gespeichert.

Weiterhin wird beim erfindungsgemäßen Verfahren die Energie in einem Überdruckspeicher und einem Unterdruckspeicher gespeichert. Bei einer Speicherung sowohl in einem Überdruckspeicher als auch in einem Unterdruckspeicher kann insbesondere eine ABS-Regelung mittels des erzeugten Drucks beziehungsweise Unterdrucks ausgeführt werden. Somit ist die Steuereinheit zur Ausführung der ABS-Regelung unabhängig von einem Moment, in welchem gerade Energie durch die Federeinrichtung am Zweirad erzeugt wird.

Besonders bevorzugt erfolgt eine Druckübersetzung des durch die Federeinrichtung erzeugten Drucks, um einen möglichst hohen Überdruck oder Unterdruck in der Druckspeichereinrichtung zu realisieren.

Vorzugsweise ist auch an einer Schnittstelle zwischen den Hydraulikkreisläufen ein Druckübersetzer integriert, damit insbesondere die im Bremskreislauf notwendigen Drücke erreicht werden.

Es sei ferner angemerkt, dass die Steuereinheit für die Nutzung der während des Fahrens erzeugten Energie mittels einer Federeinrichtung auch in bereits bestehende Steuereinheiten am Zweirad integriert werden kann.

### Kurze Beschreibung der Zeichnung

Nachfolgend werden bevorzugte Ausführungsbeispiele der Erfindung unter Bezugnahme auf die begleitende Zeichnung im Detail beschrieben. In der Zeichnung sind gleiche beziehungsweise funktional gleiche Bauteile jeweils mit den gleichen Bezugszeichen bezeichnet. In der Zeichnung ist:
- Figur 1: eine schematische Ansicht eines Zweirads als Elektrofahrrad gemäß einem ersten bevorzugten Ausführungsbeispiel der Erfindung,
- Figur 2: eine schematische Darstellung einer Zweirad-Baugruppe gemäß dem ersten Ausführungsbeispiel der Erfindung, und
- Figur 3: eine schematische Darstellung einer Zweirad-Baugruppe gemäß einem zweiten Ausführungsbeispiel der Erfindung.

### Bevorzugte Ausführungsformen der Erfindung

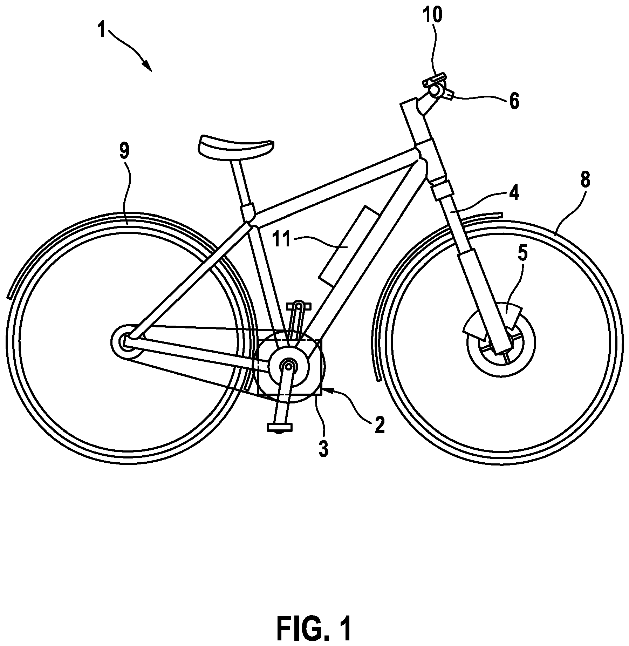

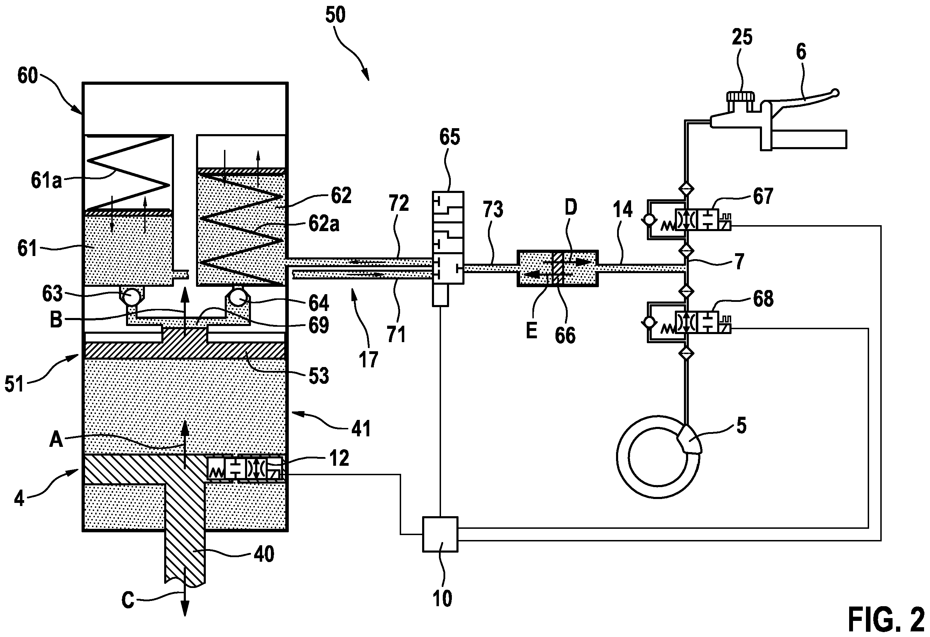

Nachfolgend wird unter Bezugnahme auf die Figuren 1 und 2 eine Zweirad-Baugruppe 50 eines Zweirads 1 eines ersten Ausführungsbeispiels im Detail beschrieben.

Wie aus Figur 1 ersichtlich ist, ist das Zweirad 1 ein Elektrofahrrad und umfasst einen Kurbeltrieb 2 mit Pedalen und einem elektrischen Antrieb 3, welcher im Bereich des Kurbeltriebs 2 angeordnet ist. Bezugszeichen 11 bezeichnet einen Akku. Das Zweirad 1 umfasst ferner ein Vorderrad 8 und ein Hinterrad 9, wobei am Vorderrad 8 eine Federeinrichtung 4 angeordnet ist. Die Federeinrichtung 4 ist eine Federgabel.

Wie aus Figur 2 ersichtlich ist, umfasst die Federeinrichtung 4 ein Federbein 40, welches in einem Federzylinder 41 geführt ist. Die Federeinrichtung 4 dieses Ausführungsbeispiels ist eine hydraulische Federgabel am Vorderrad 8 des Elektrofahrrads und weist eine verstellbare Dämpfung auf, welche mittels eines Ventils im Kolbenbereich des Federbeins 40, welches auch als Arretiervorrichtung 12 verwendet werden kann, verstellbar ist.

Ferner ist eine Bremseinrichtung mit einer Radbremse 5, einem Bremsauslöser 6 in Form eines Handbremshebels 6 und einer Radbremse 5 am Vorderrad 8 vorgesehen. Der Handbremshebel 6 ist über einen Bremszylinder 25 mit der hydraulischen Bremsleitung 7 verbunden.

Ferner umfasst die Zweirad-Baugruppe 50 eine Koppeleinrichtung 51, welche die Federeinrichtung 4 mit der hydraulischen Bremseinrichtung verbindet. Die Koppeleinrichtung 51 umfasst einen Druckübersetzer 53 in Form eines doppelt wirkenden Kolbens.

Wie aus Figur 2 ersichtlich ist, zweigt von der hydraulischen Bremsleitung 7 eine hydraulische Verbindungsleitung 14 ab, welcher zur Koppeleinrichtung 51 führt, genauer zu einem Unterdruckspeicher 62 und einem Überdruckspeicher 61.

In diesem Ausführungsbeispiel ist in der hydraulischen Verbindungsleitung 14 ein Trennkolben 66 vorgesehen, wodurch ein erster Hydraulikbereich der hydraulischen Bremsleitung 7 von einem zweiten Hydraulikbereich eines Fluidzwischenbereichs 17 zwischen dem Trennkolben 66 und den Druckspeichern vorgesehen ist. Der Fluidzwischenbereich 17 ist ebenfalls mit einem Hydraulikfluid gefüllt.

Wie aus Figur 2 ersichtlich ist, ist in diesem Fluidzwischenbereich 17 zwischen dem Druckübersetzer 53 und dem Trennkolben 66 eine Druckspeichereinrichtung 60 angeordnet. Die Druckspeichereinrichtung 60 umfasst den Überdruckspeicher 61 sowie den Unterdruckspeicher 62.

Zwischen dem Überdruckspeicher 61 und einem Hydraulikvolumen 69 ist ein erstes Rückschlagventil 63 angeordnet. Ein zweites Rückschlagventil 64 ist zwischen dem Hydraulikvolumen 69 und dem Unterdruckspeicher 62 angeordnet. Wie aus Figur 2 ersichtlich ist, ist die Schließrichtung des ersten Rückschlagventils 63 unterschiedlich von der des zweiten Rückschlagventils 64. Bei einem Druckhub des Druckübersetzers 53 öffnet das erste Rückschlagventil 63 und das zweite Rückschlagventil 64 schließt. Hierdurch kann ein Druck im Überdruckspeicher 61 vergrößert werden. Bei einem Rückhub der Federeinrichtung 4 schließt das erste Rückschlagventil 63 und das zweite Rückschlagventil 64 öffnet. Hierdurch kann ein Unterdruck im Unterdruckspeicher 62 vergrößert werden.

In dem Fluidzwischenbereich 17 zwischen der Koppeleinrichtung 51 und der hydraulischen Bremseinrichtung ist ein Stellventil 65 angeordnet. Das Stellventil 65 wird mittels einer Steuereinheit 10 verstellt. Wie aus Figur 2 ersichtlich ist, ist das Stellventil 65 ein 3/3-Wegeventil. Von dem Überdruckspeicher 61 führt eine erste Leitung 71 zum Stellventil 65. Vom Unterdruckspeicher 62 führt eine zweite Leitung 72 zum Stellventil 65. Vom Stellventil 65 weg führt eine dritte Leitung 73, welche zum Trennkolben 66 führt, welcher den Fluidzwischenbereich 17 von der Verbindungsleitung 14 trennt.

Figur 2 zeigt den geschlossenen Zustand des Stellventils 65, sodass keine Verbindung zwischen der ersten und zweiten Leitung 71, 72 und der dritten Leitung 73 vorhanden ist.

In der hydraulischen Bremsleitung 7 ist ferner ein erstes Sperrventil 67 und optional ein zweites Sperrventil 68 angeordnet. Das zweite Sperrventil 68 ist nur dann notwendig, wenn man Bremsflüssigkeit gegen den Fahrerbremsdruck zurück in den Geberkolben am Bremshebel pumpen möchte. Wie aus Figur 2 ersichtlich ist, führt die Verbindungsleitung 14 aus einem Bereich der hydraulischen Bremsleitung 7 zwischen dem ersten Sperrventil 67 und dem zweiten Sperrventil 68 ab. Die beiden Sperrventile 67, 68 sind ebenfalls mit der Steuereinheit 10 verbunden. An jedem der beiden Sperrventile 67, 68 ist jeweils ein Bypass vorgesehen, in welchem ein eigenes Rückschlagventil angeordnet ist.

Die Funktion der Zweirad-Baugruppe 50 ist dabei wie folgt: Bei einem Einfedervorgang der Federeinrichtung 4 wird das Federbein 40 in Richtung des Pfeils A bewegt. Hierdurch bewegt sich der Druckübersetzer 53 in Richtung des Pfeils B, wodurch ein Druck im Hydraulikvolumen 69 ansteigt. Abhängig von einer Stellung der Arretiervorrichtung 12 wird hierbei eine größere oder kleinere Dämpfung des Einfedervorgangs ermöglicht. Durch den Druckanstieg im Hydraulikvolumen 69 öffnet das erste Rückschlagventil 63 und das zweite Rückschlagventil 64 schließt. Hierdurch kann ein Druck im Überdruckspeicher 61 entgegen der Federkraft der im Überdruckspeicher 61 angeordneten Rückstellfeder 61a erhöht werden. Beim Rückhub des Federbeins 40 in Richtung des Pfeils C wird über den Druckübersetzer 53 im Hydraulikvolumen 69 ein Unterdruck erzeugt. Hierdurch schließt das erste Rückschlagventil 63 und das zweite Rückschlagventil 64 öffnet. Dadurch wird Medium aus dem Unterdruckspeicher 62 über das geöffnete zweite Rückschlagventil 64 entfernt und ein Unterdruck im Unterdruckspeicher 62 wird größer. Im Unterdruckspeicher 62 ist dabei ein Rückstellelement 62a angeordnet.

Somit kann während des normalen Fahrbetriebs des Zweirads ein kontinuierliches Aufladen des Überdruckspeichers 61 und des Unterdruckspeichers 62 erfolgen, falls Einfedervorgänge mittels der Federeinrichtung 4 am Vorderrad auftreten. Somit kann Energie, welche durch die hin- und hergehenden Bewegungen des Federbeins 40 im Federzylinder 41 erzeugt werden, im Überdruckspeicher 61 und im Unterdruckspeicher 62 gespeichert werden.

Diese gespeicherte Energie kann nun beispielsweise in einem ABS-Regelvorgang und/oder in einem ASR-Regelvorgang und/oder einem Überschlagschutz und/oder einer Wegfahrsperre verwendet werden.

Hierzu wird mittels der Steuereinheit 10 das Stellventil 65 betätigt. Wenn beispielsweise ein Blockieren des Vorderrads 8 während eines Bremsvorgangs droht, was zum Beispiel mittels eines Drehzahlsensors (nicht gezeigt) ermittelt werden kann, kann mittels der Steuereinheit 10 ein Druck in der hydraulischen Bremsleitung 7 reduziert werden. Hierzu wird das Stellventil 65 in eine Position gebracht, in welcher die dritte Leitung 73 mit der zweiten Leitung 72 vom Unterdruckspeicher verbunden ist. Hierdurch wird der Trennkolben 66 in Richtung des Pfeils E bewegt, wodurch der Druck in der hydraulischen Bremsleitung 7 reduziert werden kann. Dadurch wird ein Blockieren des Vorderrads 8 während eines Bremsvorgangs vermieden. Parallel wird das erste Sperrventil 67 geschlossen, damit der Fahrer die notwendige Druckreduktion nicht durch Volumennachschub kompensieren kann.

Wenn eine Druckerhöhung in der hydraulischen Bremsleitung 7 notwendig ist, wird das Stellventil 65 mittels der Steuereinheit 10 in die Position gestellt, in welcher der Überdruckspeicher 61 über die erste Leitung 71 mit der dritten Leitung 73 verbunden ist. Hierdurch wird der Trennkolben 66 in Richtung des Pfeils D bewegt, sodass ein Druck über die Verbindungsleitung 14 in der hydraulischen Bremsleitung 7 ansteigt. Somit kann beispielsweise eine ABS-Regelung mit Druckerhöhungen und Druckreduzierungen in der hydraulischen Bremsleitung 7 erreicht werden.

Das Stellventil 65 ermöglicht jedoch auch eine komplette Trennung der hydraulischen Bremseinrichtung von der Druckspeichervorrichtung 60.

Wie aus Figur 2 ersichtlich ist, sind der Überdruckspeicher 61 und der Unterdruckspeicher 62 beide im Federzylinder 41 angeordnet. Hierdurch kann ein besonders kompakter Aufbau der Zweirad-Baugruppe 50 bereitgestellt werden. Die Steuereinheit 10 kann in eine sowieso am Zweirad vorhandende Steuereinrichtung integriert werden. Alternativ kann auch eine separate Steuereinrichtung für die Nutzung der mittels der Federeinrichtung 4 bereitgestellten Energie vorgesehen werden.

Alternativ kann der Trennkolben 66 auch als Druckübersetzer oder als Druckminderer fungieren.

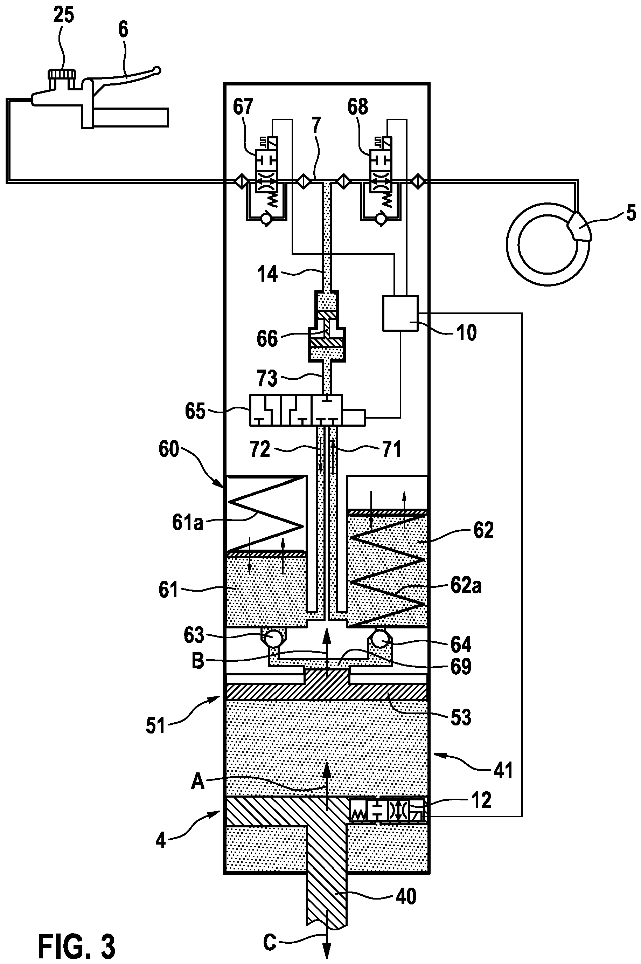

Figur 3 zeigt eine Zweirad-Baugruppe 50 gemäß einem zweiten Ausführungsbeispiel der Erfindung. Im Unterschied zum ersten Ausführungsbeispiel ist beim zweiten Ausführungsbeispiel der Aufbau derart vorgesehen, dass ein besonders kostengünstiger und kompakter Aufbau möglich ist. Hierzu sind neben dem Überdruckspeicher 61 und dem Unterdruckspeicher 62 auch noch das Stellventil 65 sowie das ersten und zweite Sperrventil 67, 68 im Federzylinder 41 angeordnet. Vorzugsweise ist auch die Steuereinheit 10 im Federzylinder 41 angeordnet. Dadurch kann ein besonders kleiner Platzbedarf realisiert werden. Das Medium in der hydraulischen Druckspeichervorrichtung 60 ist somit unterschiedlich wie das in der hydraulischen Bremsleitung 7, nämlich die Bremsflüssigkeit der Bremseinrichtung. Ansonsten entspricht dieses Ausführungsbeispiel dem ersten Ausführungsbeispiel, sodass auf die dort gegebene Beschreibung verwiesen werden kann.

Es sei zu beiden Ausführungsbeispielen angemerkt, dass es auch möglich ist, eine elektrisch betriebene Pumpe vorzusehen, mit welcher ein Druckniveau im Überdruckspeicher 61 und/oder im Unterdruckspeicher 62 geändert werden kann. Hierdurch können die Druckspeicher geladen werden, falls keine Federwirkung durch die Federeinrichtung 4 bereitgestellt wird. Dies kann beispielsweise bei Vorsehen einer manuell betätigbaren Arretiervorrichtung für die Federeinrichtung sein, wenn der Nutzer des Zweirads diese aktiviert. Durch das Vorsehen der elektrisch betriebenen Pumpe kann somit jederzeit der Überdruckspeicher 61 und/oder der Unterdruckspeicher 62 geladen werden. Hierbei müssen nur kleine Drücke mittels der Pumpe bereitgestellt werden, um die Druckspeicher zu laden.

Es sei ferner zu beiden Ausführungsbeispielen angemerkt, dass alternativ auch kein Fluidzwischenbereich vorgesehen ist. Somit mündet die hydraulische Verbindungsleitung 14 direkt am Stellventil 65.

## Patentansprüche

1. Zweirad-Baugruppe, insbesondere Fahrrad-Baugruppe, umfassend
- eine Federeinrichtung (4),
- eine hydraulische Bremseinrichtung mit einer Radbremse (5), einem Bremsauslöser (6) und einer hydraulischen Bremsleitung (7),
- eine Koppeleinrichtung (51), welche die Federeinrichtung (4) und die Bremseinrichtung miteinander koppelt, und
- eine Druckspeichereinrichtung (60), welche eingerichtet ist, Energie, welche durch eine Federwirkung der Federeinrichtung (4) bereitgestellt wird, zu speichern,
**dadurch gekennzeichnet, dass**
die Druckspeichereinrichtung (60) einen Überdruckspeicher (61) undr einen Unterdruckspeicher (62) umfasst.

2. Zweirad-Baugruppe nach einem der vorhergehenden Ansprüche, ferner umfassend ein Stellventil (65), welches zwischen der Druckspeichereinrichtung (60) und der hydraulischen Bremseinrichtung angeordnet ist.

3. Zweirad-Baugruppe nach Anspruch 2, wobei zwischen dem Überdruckspeicher (61) und dem Stellventil (65) eine erste Leitung (71) angeordnet ist, zwischen dem Unterdruckspeicher (62) und dem Stellventil (65) eine zweite Leitung (72) angeordnet ist und vom Stellventil eine dritte Leitung (73) zur hydraulischen Bremseinrichtung fortführt.

4. Zweirad-Baugruppe nach einem der vorhergehenden Ansprüche, ferner umfassend eine Steuereinheit (10), welche eingerichtet ist, mittels der Druckspeichervorrichtung (60) eine ABS-Regelung und/oder eine ASR-Regelung und/oder eine Wegfahrsperre und/oder einen Überschlagschutz bereitzustellen.

5. Zweirad-Baugruppe nach einem der vorhergehenden Ansprüche, wobei die Bremseinrichtung eine Vorderradbremse eines Zweirads ist.

6. Zweirad-Baugruppe nach einem der vorhergehenden Ansprüche, wobei ein Fluidzwischenbereich (17) zwischen der hydraulischen Bremseinrichtung und der Federeinrichtung (4) angeordnet ist und die Druckspeichervorrichtung (60) im Fluidzwischenbereich (17) angeordnet ist.

7. Zweirad-Baugruppe nach einem der vorhergehenden Ansprüche, wobei die Federeinrichtung (4) eine Federgabel mit einem Federbein (40) und einem Federzylinder (41) ist, wobei die hydraulische Druckspeichervorrichtung (60) im Federzylinder (41) angeordnet ist, und/oder wobei das Stellventil (65) im Federzylinder (41) angeordnet ist und/oder wobei die Steuereinheit (10) im Federzylinder (41) angeordnet ist.

8. Zweirad-Baugruppe nach einem der vorhergehenden Ansprüche, wobei die Federeinrichtung eine Sattelfedereinrichtung umfasst, welche an einem Sattel des Zweirads anordenbar ist, wobei die Steuereinheit (10) eingerichtet ist, die Sattelfedereinrichtung zu sperren und/oder den Sattel mittels der Sattelfedereinrichtung abzusenken.

9. Zweirad-Baugruppe nach einem der Ansprüche 4 bis 8, wobei die Federeinrichtung (4) eine Arretiervorrichtung (12) umfasst, wobei die Steuereinheit (10) vorgesehen ist, die Arretiervorrichtung (12) zu arretieren, um die Federeinrichtung (4) zu blockieren oder auch den Durchfluss zu regeln.

10. Verfahren zur Nutzung einer mittels einer Federeinrichtung (4) eines Zweirads, insbesondere eines Elektrofahrrads, durch Federungsvorgänge bereitgestellte Energie in einer hydraulischen Bremseinrichtung, wobei die hydraulische Bremseinrichtung mit der Federeinrichtung (4) gekoppelt ist und die mittels der Federeinrichtung (4) bereitgestellte Energie in einer Druckspeichereinrichtung (60) gespeichert wird, **dadurch gekennzeichnet, dass** die Druckspeichereinrichtung (60) einen Überdruckspeicher (61) zum Speichern eines Überdrucks und einen Unterdruckspeicher (62) zum Speichern eines Unterdrucks aufweist, wobei vorzugsweise der Überdruckspeicher und der Unterdruckspeicher abwechselnd durch die Federwirkung der Federeinrichtung (4) geladen werden.

11. Verfahren nach Anspruch 10, wobei mittels der in der Druckspeichereinrichtung (60) gespeicherten Energie eine ABS-Regelung und/oder eine ASR-Regelung und/oder eine Wegfahrsperre und/oder ein Überschlagschutz für das Zweirad bereitgestellt wird.

12. Verfahren nach einem der Ansprüche 10 oder 11, wobei eine Federwirkung der Federeinrichtung (4) in Abhängigkeit eines Druckniveaus im Überdruckspeicher (61) und/oder Unterdruckspeicher (62) gesteuert wird.

## Claims

1. Two-wheeled-vehicle assembly, in particular bicycle assembly, comprising:
- a suspension device (4),
- a hydraulic braking device having a wheel brake (5), a braking-action initiator (6) and a hydraulic brake line (7),
- a coupling device (51), which couples the suspension device (4) and the braking device to one another, and
- a pressure-accumulator device (60), which is designed to store energy which is provided by spring action of the suspension device (4),
**characterized in that**
the pressure-accumulator device (60) comprises a positive-pressure accumulator (61) and a vacuum accumulator (62).

2. Two-wheeled-vehicle assembly according to one of the preceding claims, also comprising a control valve (65), which is arranged between the pressure-accumulator device (60) and the hydraulic braking device.

3. Two-wheeled-vehicle assembly according to Claim 2, wherein a first line (71) is arranged between the positive-pressure accumulator (61) and the control valve (65), a second line (72) is arranged between the vacuum accumulator (62) and the control valve (65), and a third line (73) extends from the control valve to the hydraulic braking device.

4. Two-wheeled-vehicle assembly according to one of the preceding claims, also comprising a control unit (10), which is designed to provide, by means of the pressure-accumulator device (60), antilock-brake control and/or traction control and/or an immobilizer system and/or rollover protection.

5. Two-wheeled-vehicle assembly according to one of the preceding claims, wherein the braking device is a front-wheel brake of a two-wheeled vehicle.

6. Two-wheeled-vehicle assembly according to one of the preceding claims, wherein an intermediate fluid region (17) is arranged between the hydraulic braking device and the suspension device (4), and the pressure-accumulator device (60) is arranged in the intermediate fluid region (17).

7. Two-wheeled-vehicle assembly according to one of the preceding claims, wherein the suspension device (4) is a suspension fork with a suspension strut (40) and a suspension cylinder (41), wherein the hydraulic pressure-accumulator device (60) is arranged in the suspension cylinder (41), and/or wherein the control valve (65) is arranged in the suspension cylinder (41), and/or wherein the control unit (10) is arranged in the suspension cylinder (41).

8. Two-wheeled-vehicle assembly according to one of the preceding claims, wherein the suspension device comprises a saddle-suspension device, which can be arranged on a saddle of the two-wheeled vehicle, wherein the control unit (10) is designed to lock the saddle-suspension device and/or to lower the saddle by means of the saddle-suspension device.

9. Two-wheeled-vehicle assembly according to one of Claims 4 to 8, wherein the suspension device (4) comprises an arresting device (12), wherein the control unit (10) is provided to arrest the arresting device (12), in order to block the suspension device (4) or also to regulate the throughflow.

10. Method by means of which energy supplied by means of a suspension device (4) of a two-wheeled vehicle, in particular of an electric bicycle, as a result of suspension operations is used in a hydraulic braking device, wherein the hydraulic braking device is coupled to the suspension device (4) and the energy supplied by means of the suspension device (4) is stored in a pressure-accumulator device (60),
**characterized in that**
the pressure-accumulator device (60) has a positive-pressure accumulator (61) for storing a positive pressure and also has a vacuum accumulator (62) for storing a negative pressure, wherein preferably the positive-pressure accumulator and the vacuum accumulator are charged alternately by the spring action of the suspension device (4).

11. Method according to Claim 10, wherein energy stored in the pressure-accumulator device (60) is used provide antilock-brake control and/or traction control and/or an immobilizer system and/or rollover protection for the two-wheeled vehicle.

12. Method according to either of Claims 10 and 11, wherein spring action of the suspension device (4) is controlled in dependence on a level of pressure in the positive-pressure accumulator (61) and/or vacuum accumulator (62).

## Revendications

1. Module pour un véhicule à deux roues, en particulier module de bicyclette, comprenant :
- un système de ressort (4),
- un système de freinage hydraulique avec un frein de roue (5), un déclencheur de frein (6) et une conduite de frein hydraulique (7),
- un système d'accouplement (51) qui accouple l'un à l'autre le système de ressort (4) et le système de freinage, et
- un système d'accumulateur de pression (60) qui est prévu pour stocker de l'énergie qui est fournie par un effet de ressort du système de ressort (4),
**caractérisé en ce que**
le système d'accumulateur de pression (60) comprend un accumulateur de surpression (61) et un accumulateur de dépression (62).

2. Module pour un véhicule à deux roues selon l'une quelconque des revendications précédentes, comprenant en outre une soupape de régulation (65) qui est disposée entre le système d'accumulateur de pression (60) et le système de freinage hydraulique.

3. Module pour un véhicule à deux roues selon la revendication 2, dans lequel, entre l'accumulateur de surpression (61) et la soupape de régulation (65) est disposée une première conduite (71), entre l'accumulateur de dépression (62) et la soupape de régulation (65) est disposée une deuxième conduite (72), et une troisième conduite (73) s'étend depuis la soupape de régulation vers le système de freinage hydraulique.

4. Module pour un véhicule à deux roues selon l'une quelconque des revendications précédentes, comprenant en outre une unité de commande (10) qui est prévue pour fournir au moyen du dispositif d'accumulateur de pression (60) une régulation ABS et/ou une régulation ASR et/ou une immobilisation et/ou une protection contre le retournement.

5. Module pour un véhicule à deux roues selon l'une quelconque des revendications précédentes, dans lequel le système de freinage est un frein de roue avant d'un véhicule à deux roues.

6. Module pour un véhicule à deux roues selon l'une quelconque des revendications précédentes, dans lequel une région intermédiaire de fluide (17) est disposée entre le système de freinage hydraulique et le système de ressort (4), et le dispositif d'accumulateur de pression (60) est disposé dans la région intermédiaire de fluide (17).

7. Module pour un véhicule à deux roues selon l'une quelconque des revendications précédentes, dans lequel le système de ressort (4) est une fourche à suspension avec une jambe de force (40) et un cylindre à ressort (41), le dispositif d'accumulateur de pression hydraulique (60) étant disposé dans le cylindre à ressort (41) et/ou la soupape de régulation (65) étant disposée dans le cylindre à ressort (41), et/ou l'unité de commande (10) étant disposée dans le cylindre à ressort (41) .

8. Module pour un véhicule à deux roues selon l'une quelconque des revendications précédentes, dans lequel le système de ressort comprend un système de ressort de selle qui peut être disposé sur une selle du véhicule à deux roues, l'unité de commande (10) étant prévue pour bloquer le système de ressort de selle et/ou pour abaisser la selle au moyen du système de ressort de selle.

9. Module pour un véhicule à deux roues selon l'une quelconque des revendications 4 à 8, dans lequel le système de ressort (4) comprend un dispositif de blocage (12), l'unité de commande (10) étant prévue pour bloquer le dispositif de blocage (12) afin de bloquer le système de ressort (4) ou également de régler le débit.

10. Procédé pour l'utilisation d'une énergie fournie au moyen d'un système de ressort (4) d'un véhicule à deux roues, en particulier d'une bicyclette électrique, par des opérations de suspension dans un système de freinage hydraulique, le système de freinage hydraulique étant accouplé au système de ressort (4) et l'énergie fournie au moyen du système de ressort (4) étant stockée dans un système d'accumulateur de pression (60), **caractérisé en ce que** le système d'accumulateur de pression (60) présente un accumulateur de surpression (61) pour stocker une surpression et un accumulateur de dépression (62) pour stocker une dépression, l'accumulateur de surpression et l'accumulateur de dépression étant de préférence chargés en alternance par l'effet de ressort du système de ressort (4).

11. Procédé selon la revendication 10, dans lequel une régulation ABS et/ou une régulation ASR et/ou une immobilisation et/ou une protection contre le retournement sont fournies pour le véhicule à deux roues au moyen de l'énergie stockée dans le système d'accumulateur de pression (60).

12. Procédé selon l'une quelconque des revendications 10 ou 11, dans lequel un effet de ressort du système de ressort (4) est commandé en fonction d'un niveau de pression dans l'accumulateur de surpression (61) et/ou dans l'accumulateur de dépression (62).
